# EUROPÄISCHE PATENTSCHRIFT

(11) **EP 1 259 960 B1**
(45) Veröffentlichungstag und Bekanntmachung des Hinweises auf die Patenterteilung: **20.08.2003**
(21) Anmeldenummer: 00974520.9
(22) Anmeldetag: 10.11.2000
(51) Int. Cl.: G11B 7/24

(54) **VERFAHREN ZUR REMANENTEN OPTISCHEN SPEICHERUNG VON DATEN**
METHOD FOR THE REMANENT OPTICAL STORAGE OF DATA
PROCEDE DE MEMORISATION OPTIQUE REMANENTE DE DONNEES

(30) Priorität: 12.11.1999 DE 19956162
(43) Veröffentlichungstag der Anmeldung: 27.11.2002
(73) Patentinhaber: Universität Potsdam, 14469 Potsdam (DE)
(72) Erfinder: PIETSCH, Ullrich, 04155 Leipzig (DE)
(74) Vertreter: Liesegang, Roland, Dr.-Ing.
(86) Internationale Anmeldenummer: EP0011148
(87) Internationale Veröffentlichungsnummer: WO01037273

(56) Entgegenhaltungen:
- DE-A- 3 623 395
- A.NATANSOHN ET AL: "Azo Polymers for Reversible Optical Storage." MACROMOLECULES, Bd. 25, Nr. 8, 13. April 1992 (1992-04-13), Seiten 2268-2273, XP000264750 Washinton DC US
- A.NATANSOHN ET AL: "Azo Polymers for Reversible Optical Storage " MACROMOLECULES, Bd. 25, Nr. 20, 28. September 1992 (1992-09-28), Seiten 5531-5532, XP000305198 Washinton DC US

## Beschreibung

Die Erfindung betrifft ein Verfahren zur remanenten optischen Speicherung von Daten.

Es ist seit längerem bekannt, daß man auf der Oberfläche amorpher Polymerfilme, die Azobenzene in den Seitengruppen enthalten, durch holographische Bestrahlung mit sichtbarem, linear oder zirkular polarisierten Licht von ca. 500 nm ein mesoskopisches Oberflächenrelief (Oberflächenmuster) erzeugen kann, das zur Speicherung von Daten dienen kann. Dazu wird ein Teil eines Laserstrahls an einem ebenen Spiegel reflektiert und mit einem zweiten Teilstrahl, der die Probe direkt beleuchtet, zur Interferenz gebracht. Dadurch wird auf der Probenoberfläche durch einen lokalen Materialtransport ein Lichtmuster abgebildet, dessen laterale Periode durch Variation des Anstellwinkels zwischen Spiegel und Probenoberfläche zwischen ca. 300 nm und 3000 nm verändert werden kann. Durch unterschiedliche Anstellwinkel kann so z. B. ein Strichcode als verschlüsselte Information auf der Oberfläche der Probe erzeugt werden. Je nach Beleuchtungsdauer, Polarisationszustand und Viskosität des Polymerfilms entsteht ein Oberflächenmuster mit einer Amplitude von mehreren 100 nm.

Die Formierung des Oberflächenmusters erfolgt bei Raumtemperatur, also bei Temperaturen weit unterhalb der sogenannten Glastemperatur des betreffenden Polymers, bei der das Polymer erweicht und zu fließen beginnt.

Die physikalischen Ursachen für diesen Materialtransport sind noch nicht völlig geklärt. Sicher ist allein, daß die holographische Beleuchtung des Polymers zu einer lokal inhomogenen cis-trans-Isomerisierung der Azobenzen-Seitengruppen führt, die als treibende Kraft für den Materialtransport anzusehen ist.

Das auf der Oberfläche des Polymerfilms mit hoher Dichte erzeugte Muster kann mittels Beugung von polarisiertem Licht kleiner Leistung ausgelesen werden. Für einen Betrachter ist die Stelle, an der sich das eingebrachte Oberflächenrelief befindet, bei normaler Beleuchtung durch ein farbiges Schimmern erkennbar, das durch Interferenzbildung an dem Oberflächenrelief verursacht wird.

Durch Erwärmen des Films über die Glastemperatur kann das erzeugte Oberflächenmuster wieder gelöscht werden, wobei die Oberfläche völlig glatt wird, so daß der Polymerfilm anschließend neu beschrieben werden kann. Derartige Polymerfilme eignen sich so für optische Sensoren, für RAMs, holographische Speicher u. ä.

Eine Reihe von Materialien, die sich für industrielle Zwecke eignen sollen, ist in der US-A-5.173.381 beschrieben.

Für bestimmte Zwecke ist es jedoch nicht erwünscht, daß die Daten auf dem Informationsträger wieder gelöscht werden können. Außerdem ist es oft nicht erwünscht, daß erkennbar ist, daß ein Gegenstand mit einer Kodierung versehen ist.

Der Erfindung liegt daher die Aufgabe zugrunde, ein Verfahren anzugeben, mit dem bei sichtbarem Licht unsichtbare Daten dauerhaft auf einen Informationsträger geschrieben werden können.

Die Aufgabe wird erfindungsgemäß gelöst durch die Merkmale im kennzeichnenden Teil des Anspruchs 1 im Zusammenwirken mit den Merkmalen im Oberbegriff. Zweckmäßige Ausgestaltungen der Erfindung sind in den Unteransprüchen enthalten.

Danach werden Polymerfilme mit Azobenzen Seitengruppen, die eine polare Gruppe aufweisen, die im Normalzustand keine flüssigkristalline Ordnung haben und die unter Einwirkung von polarisiertem Licht ein mesoskopisches Oberflächenmuster bilden, zum Einschreiben von Daten derartigem polarisierten Licht solange ausgesetzt, bis sich ein Oberflächenrelief gebildet hat. Anschließend werden sie einer Temperatur kurz oberhalb ihrer Glastemperatur mindestens solange ausgesetzt, bis sich das Oberflächenmuster wieder eingeebnet hat.

Überraschend wurde nämlich gefunden, daß sich bei bestimmten Polymeren, die polare Azobenzen Seitengruppen aufweisen, ein einmal erzeugtes Oberflächenmuster, das anschließend durch Temperaturbehandlung wieder eingeebnet wird, in einem Dichtemuster an gleicher Stelle unterhalb der Oberfläche abbildet. Das Dichtemuster ist bei normaler Beleuchtung nicht sichtbar, so daß die Stelle, an der eine Information, z. B. ein Strichcode, in den Polymerfilm eingeschrieben wurde, ohne spezielle Mittel nicht auszumachen ist. Es kann allerdings mit kohärenter Lichtstreuung ausgelesen werden. Das Verfahren eignet sich somit zum Unterbringen von geheimen Informationen, die nicht für jedermann lesbar sind, z. B. zum Anbringen eines Echtheitssiegels auf Markenwaren, die so z. B. bei einer Echtheitsüberprüfung durch Zoll- oder andere Behörden ohne nähere Untersuchung der Ware selbst von Falsifikaten unterscheidbar sind. Das thermisch erzeugte sekundäre Dichtemuster kann durch gleichzeitiges Bestrahlen der Probe mit Licht einer Wellenlänge um 660nm und einer Leistung < 1mW/cm² fixiert werden.

Die Erfindung soll nachstehend anhand eines Ausführungsbeispiels näher erläutert werden. In den zugehörigen Zeichnungen zeigen
Fig. 1 eine Anordnung zum Nachweis eines Dichtemusters nach Einebnen eines Oberflächenmusters mittels Wärmebehandlung und
Fig. 2 die Beugungsintensität eines Oberflächen-bzw. Dichtemusters während der Einebnung des Oberflächenmusters durch Wärmebehandlung.

Ein Oberflächen- bzw. Dichtemuster auf einem geeigneten Polymerfilm, der Azobenzene in den Seitengruppen enthält, wird auf folgende Weise hergestellt:

Zuerst wird mittels einer üblichen Beschichtungstechnik, z. B. spin-coating, ein dünner Film des Azobenzen-Homopolymers pDR1M (poly[4'-[[2-(methacryloxy)ethyl]-ethyl]amino-4-nitroazobenzene) oder pDR13A (poly[4'-[[2-(acryloxy) ethyl]-ethyl-amino]-2-chlorophenyl]diazen) auf einem Substrat abgeschieden. Der Film wird durch kurzzeitige Temperung oberhalb der Glastemperatur, hier 129°C (pDR1M) bzw. 80°C (pDR13A), homogenisiert. Danach wird die Probenoberfläche einem Hologramm aus zirkular polarisiertem Licht der Wellenlänge von ca. 500 nm, im vorliegenden Ausführungsbeispiel von 488 nm oder 512 nm, ausgesetzt, welches nach ca. 3 bis 10 Minuten zu einem Oberflächenmuster führt, mit dem die im Hologramm verschlüsselte Information gespeichert wird.

Das Oberflächenmuster wird anschließend als Dichtemuster unterhalb der nahezu ebenen Oberfläche des Polymerfilms vergraben. Dazu wird die Probe auf eine Temperatur von 10 bis 15 Grad oberhalb der Glastemperatur des Polymers erwärmt. Infolge der erhöhten Viskosität wird das primäre Oberflächenmuster nach und nach eingeebnet. Die eingeschriebenen Daten werden dabei jedoch nicht zerstört. Vielmehr bleibt unterhalb der vorher erzeugten und nunmehr nahezu eingeebneten Oberflächenerhöhungen eine gegenüber der mittleren Materialdichte des Polymers erhöhte lokale Dichte zurück. Dieses Dichtemuster lässt sich durch gleichzeitiges Bestrahlen mit Licht von ca. 600nm fixieren. Das erzeugte Muster ist nach Abkühlung auf Raumtemperatur stabil und kann nur durch Erhöhen der Temperatur auf die Zersetzungstemperatur des Polymers, hier 200°C für pDR1M, oder durch chemische oder mechanische Zerstörung des Polymerfilms gelöscht werden. Die Daten sind nun remanent gespeichert und einer externen Beobachtung nicht mehr zugänglich. Sie lassen sich nur mit Hilfe spezifischer Verfahren nachweisen und auslesen, so z.B. mit kohärenter Lichtstreuung.

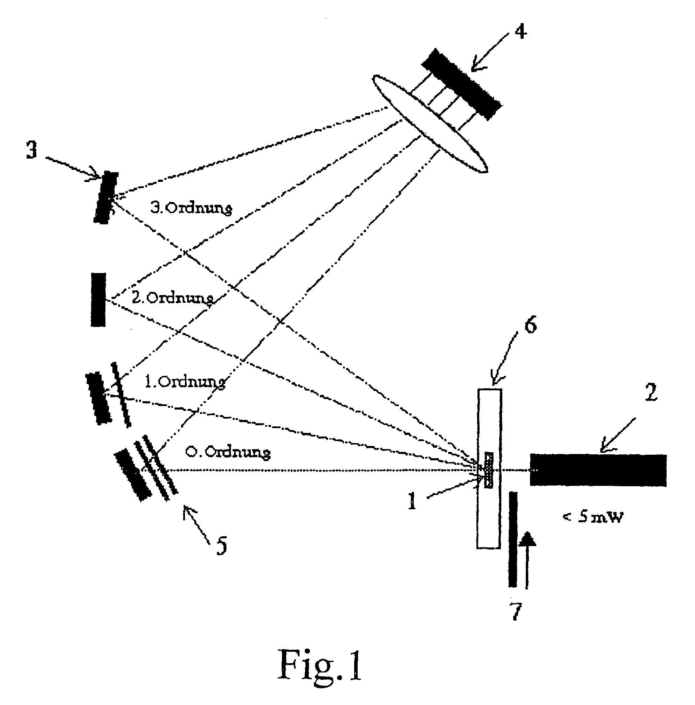

Der Prozeß der Erzeugung des sekundären (vergrabenen) Dichtemusters an einer Probe mit einem aufgebrachten Oberflächenmuster läßt sich mittels kohärenter Lichtstreuung beobachten. In Fig. 1 ist eine hierzu geeignete Versuchsanordnung schematisch dargestellt. Dazu wird eine Probe 1 mittels eines He-Ne-Lasers 2 mit einem Laserstrahl der Wellenlänge 660 nm durchstrahlt und die Fourierkomponenten nullter bis dritter Ordnung des am Oberflächen-bzw. Dichtegitter gebeugten und mittels Spiegeln 3 fokussierten Lichts als Funktion der Zeit an einem Photodioden-Array 4 gemessen. Das Oberflächenmuster, im vorliegenden Fall in Form eines Oberflächengitters, weist eine nahezu sinusodiale Modulation auf. Infolge des gewählten Abstandes der Maxima von 3µm sind in der Lichtstreuung nur die Fourierkomponenten nullter bis dritter Ordnung sichtbar. Absorber 5 dienen der Abschwächung des gebeugten Lichtes, um alle Fourierkoeffizienten gleichzeitig im Photodioden-Array 4 sichtbar zu machen.

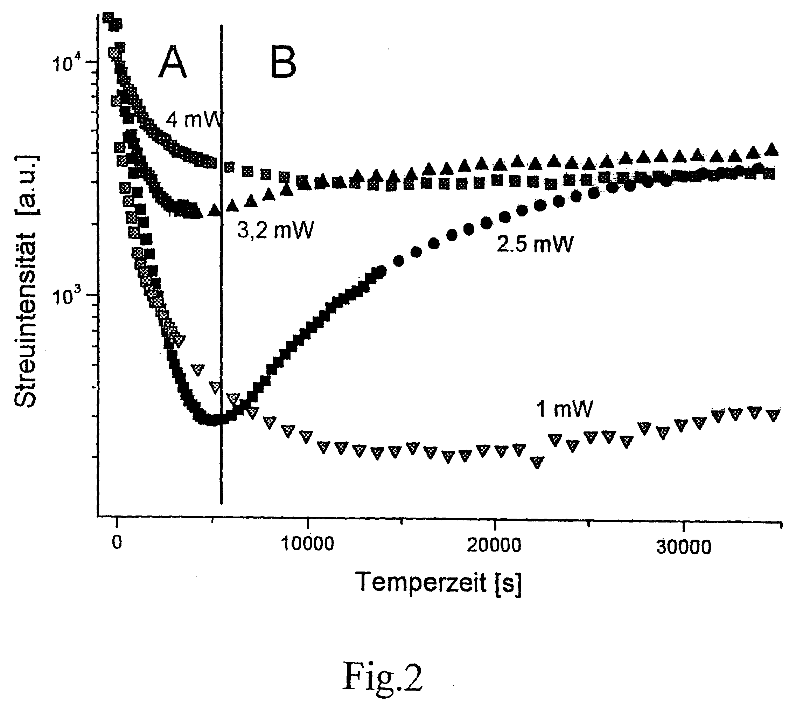

Bei Erwärmung der Probe 1 (pDR1M) bis kurz über die Glastemperatur des Polymers, hier 135°C, mittels eines Heiztisches 6, auf dem die Probe 1 positioniert ist, nimmt die Intensität der sichtbaren Fourierkomponenten rasch ab, wie im Bereich A von Fig. 2 anhand der Beugungsintensität des Peaks erster Ordnung gezeigt ist. Sie durchläuft ein Minimum und steigt mit einer Zeitkonstante von mehreren Stunden (Bereich B) wieder bis zu einem Sättigungszustand an. Im Sättigungszustand liegt die Streuintensität des nun erzeugten Dichtemusters wieder in der gleichen Größenordnung wie das zunächst erzeugte Oberflächenmuster.

Wie Fig. 2 ebenfalls zeigt, läßt sich der Prozeß der Bildung des sekundären Dichtemusters durch gleichzeitige Bestrahlung mit Licht erheblich verkürzen. Die Probe 1 wurde dazu während der Erwärmungsphase kontinuierlich durch den He-Ne-Laser 2 mit Laserlicht verschiedener Leistung bei einer Wellenlänge von 660 nm durchstrahlt und damit gleichzeitig die Intensität des Peaks erster Ordnung über der Zeit gemessen. Die Leistungseinstellung des He-Ne-Lasers 2 erfolgte durch einen Absorber 7 in den Stufen 1 mW, 2,5 mW, 3,2 mW und 4 mW. Es ist erkennbar, daß der Sättigungszustand umso schneller erreicht wird, je höher die Intensität der Bestrahlung ist.

Die schnelle Abnahme der Peakintensität im Bereich A hängt mit dem "Schmelzen" des primären Oberflächenmusters zusammen, während sich im Bereich B das Dichtemuster unterhalb des sich einebnenden Oberflächenmusters formiert.

### Bezugszeichenliste

- 1: Probe
- 2: He-Ne-Laser
- 3: Spiegel
- 4: Photodioden-Array
- 5: Absorber
- 6: Heiztisch
- 7: Absorber

## Patentansprüche

1. Verfahren zur remanenten optischen Speicherung von Daten, **dadurch gekennzeichnet, daß**
Polymerfilme mit Azobenzen Seitengruppen, die eine polare Gruppe aufweisen, die im Normalzustand keine flüssigkristalline Ordnung haben und die unter Einwirkung von polarisiertem Licht ein mesoskopisches Oberflächenmuster bilden, zum Einschreiben von Daten derartigem polarisierten Licht solange ausgesetzt werden, bis sich ein Oberflächenrelief gebildet hat, und anschließend einer Temperatur kurz oberhalb ihrer Glastemperatur mindestens solange ausgesetzt werden, bis sich das Oberflächenmuster wieder eingeebnet hat.

2. Verfahren nach Anspruch 1,
**gekennzeichnet dadurch, daß**
als Polymer das Azobenzen-Homopolymer pDR1M (poly[4'-[[2- (methacryloxy)ethyl]-ethyl]amino-4-nitroazobenzene) oder pDR13A (poly[4'-[[2-(acryloxy)ethyl]-ethyl-amino]-2-chlorophenyl] diazen) verwendet wird.

3. Verfahren nach Anspruch 1 und 2,
**gekennzeichnet dadurch, daß**
zum Einschreiben der Daten zur Erzeugung eines primären Oberflächenmusters polarisiertes Licht mit einer Wellenlänge von ca. 500 nm benutzt wird.

4. Verfahren nach Anspruch 2
gekennzeicht, dass die Wellenlänge 488nm oder 512nm beträgt.

5. Verfahren nach Anspruch 3 oder 4,
**gekennzeichnet dadurch, daß**
das Licht zirkular polarisiertes Licht ist.

6. Verfahren nach Anspruch 1,
**dadurch gekennzeichnet, daß**
die anschließende Temperaturbehandlung der Polymerfilme zur Erzeugung einer sekundären Dichtemodulation unter Einwirkung von Licht erfolgt.

7. Verfahren nach Anspruch 6
**dadurch gekennzeichnet, dass**
das Licht eine Wellenlänge von ca. 600 nm aufweist

8. Verfahren nach Anspruch 7,
**dadurch gekennzeichnet, dass**
die Wellenlänge 612 nm oder 660 nm beträgt.

9. Verfahren nach einem der Ansprüche 6-8
**dadurch gekennzeichnet, dass**
Licht durch einen Laser der Leistung kleiner als 1 mW/cm² verwendet wird.

## Claims

1. A method of remanent optical storage of data, **characterised in that** polymer films with azobenzene side groups which contain a polar group not having any liquid crystalline order in the normal state and which under action of polarised light form a mesoscopic surface pattern are subjected to said polarised light for writing in data until a surface relief has formed and are then subjected to a temperature slightly above their glass temperature at least until the surface pattern has returned to level.

2. A method according to claim 1, **characterised in that** the polymer used is the azobenzene homopolymer pDR1M (poly[4'-[[2-(methacryloxy)ethyl]-ethyl]amino-4-nitroazobenzene) or pDR13A (poly[4'-[[2-(acryloxy)ethyl]-ethyl-amino]-2-chlorophenyl]diazene).

3. A method according to claim 1 or 2, **characterised in that** polarised light having a wavelength of about 500 nm is used to generate a primary surface pattern for writing in data.

4. A method according to claim 2, **characterised in that** the wavelength is 488 nm or 512 nm.

5. A method according to claim 3 or 4, **characterised in that** the light is circular polarised light.

6. A method according to claim 1, **characterised in that** the subsequent temperature treatment of the polymer films for generating a secondary density modulation is effected by action of light.

7. A method according to claim 6, **characterised in that** the light has a wavelength of about 600 nm.

8. A method according to claim 7, **characterised in that** the wavelength is 612 nm or 660 nm.

9. A method according to any of claims 6 - 8, **characterised by** use of light from a laser having a power less than 1 mW/cm².

## Revendications

1. Procédé pour le stockage optique rémanent de données, **caractérisé en ce que** des films polymères dotés de groupes latéraux d'azobenzène, qui présentent un groupe polaire, qui ne présentent aucun ordre cristallin fluide à l'état normal et qui forment un motif de surface mésoscopique sous l'effet de la lumière polarisée, sont exposés, pour permettre l'inscription des données, à une lumière polarisée de ce type jusqu'à ce que le relief de surface se soit formé et, sont ensuite brièvement exposés à une température supérieure à la température de transition vitreuse au moins jusqu'à ce que le motif de surface soit de nouveau nivelé.

2. Procédé selon la revendication 1 **caractérisé en ce qu'**on utilise comme polymère l'homopolymère d'azobenzène pDR1M (poly[4'-([2-méthacryloxy)éthyl)-éthyl]amino-4-nitroazobenzène) ou pDR13A (poly[4'-([2-acryloxy)éthyl)-éthyl-amino-2-chlorophényl]diazène).

3. Procédé selon la revendication 1 et 2, **caractérisé en ce qu'**on utilise une lumière polarisée dotée d'une longueur d'ondes d'environ 500 nm pour inscrire les données en vue de générer un motif de surface primaire.

4. Procédé selon la revendication 2 **caractérisé en ce que** les longueurs d'ondes s'élèvent à 488 nm ou 512 nm.

5. Procédé selon la revendication 3 ou 4 **caractérisé en ce que** la lumière est une lumière polarisée circulaire.

6. Procédé selon la revendication 1 **caractérisé en ce que** le traitement thermique final des films polymères pour la fabrication d'une modulation de densité secondaire survient sous l'effet de la lumière.

7. Procédé selon la revendication 6 **caractérisé en ce que** la lumière présente une longueur d'onde d'environ 600 nm.

8. Procédé selon la revendication 7, **caractérisé en ce que** les longueurs d'onde s'élèvent à 612 nm ou 660 nm.

9. Procédé selon l'une quelconque des revendications 6 à 8 **caractérisé en ce que** la lumière est utilisée par un laser d'une pèrformance inférieure à 1 mW/cm².
